# EUROPEAN PATENT APPLICATION

(11) **EP 1 667 462 A2**
(43) Date of publication of application: **07.06.2006**
(21) Application number: 05110762.1
(22) Date of filing: 15.11.2005
(51) Int. Cl.: H04N 7/26

(54) **Video preprocessing apparatus**

(30) Priority: 03.12.2004 JP 2004351713
(71) Applicant: KABUSHIKI KAISHA TOSHIBA, Tokyo 105-8001 (JP)
(72) Inventor: OGAWA, Takehiro Toshiba Corporation, 105-8001, Tokyo (JP)
(74) Representative: Henkel, Feiler & Hänzel

(57) **Abstract**

A TV application program (200) has an MPEG encoder (202), which compresses and encodes broadcast program data output by an analog TV tuner (116) according to an MPEG2 standard encoding format. Moreover, the TV application program (200) has a preprocessor (201), which executes painting achieved by making zero luminance of image data of a portion outside a display area. The TV application program (200) executes the painting by the preprocessor (201) as an encoding preprocess by the MPEG encoder (202).

## Description

The present invention relates to a video image encoding technique suitable to a personal computer having a television function of receiving/viewing a television broadcast.

With an advance of the latest image processing technique, a personal computer equipped with a TV function of receiving/viewing a television broadcast has come to wise use. The TV function displays broadcasting program data in real time, and in addition, has a so-called recording function in general. The recording function records the program data in a built-in magnetic hard disk drive (HDD) so that user can appreciate it in his favorite time. For this reason, various proposals to enhance the quality in encoding the program data have been made (e.g., see JPN. PAT. APPLN. KOKAI Publications No. 11-266454 and No. 2004-134914).

This kind of personal computers, that is, electronic apparatus receiving and displaying broadcasted program data can not display the entire image of the program data on a display device. For this reason, it is general that the peripheral image is inevitably given outside a display area. Therefore, in fact, the peripheral image is invisible to viewers without being displayed in encoding. As a result, the peripheral image is given as noise data having a possibility of reducing the image quality of the center image given in the display area.

However, no any processing to the image outside the display area has been conventionally made to improve the image quality in the display area in encoding.

The present invention has been made in view of the foregoing circumstances. An object of the invention is to provide an information processing apparatus, which can give image processing to image data outside a display area as an encoding preprocess to improve the quality of image data in the display area. Another object of the invention is to provide a video image encoding method.

In order to achieve the foregoing objects, according to one aspect of the present invention, there is provided an information processing apparatus characterized by comprising: input means for inputting video image data; encoding means for encoding the video image data input by the input means; and preprocessing means (201) interposed between the input means and the encoding means, and for executing image processing for improving a quality of image data of an image portion inside a display area of the video image data encoded by the encoding means with respect to image data of an image portion outside the display area of the video image data input by the input means.

Another aspect of the present invention, there is provided A video image encoding method characterized by comprising: inputting video image data; encoding the input video image data; and executing image processing for improving a quality of image data of an image portion inside a display area of the encoded video image data with respect to image data of an image portion outside the display area of the input video image data, as an encoding preprocess.

According to the present invention, there is provided an information processing apparatus, which can give image processing to image data outside a display area as an encoding preprocess to improve the quality of image data in the display area, and a video image encoding method.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary perspective view showing the appearance of a computer according to one embodiment of the present invention;
FIG. 2 is an exemplary block diagram showing the system configuration of the computer shown in FIG. 1;
FIG. 3 is an exemplary block diagram to explain a broadcast program data encoding function of the computer shown in FIG. 1;
FIG. 4 is an exemplary view showing a broadcast program data image output from an analog TV tuner of the computer shown in FIG. 1;
FIG. 5 is an exemplary view showing an actual display area of a LCD included in the computer shown in FIG. 1;
FIG. 6 is an exemplary view showing an image after a preprocess by the computer shown in FIG. 1 is made;
FIG. 7 is an exemplary view to explain the principle on which the computer shown in FIG. 1 calculates a painting range based on MPEG macro block size; and
FIG. 8 is an exemplary flowchart to explain the procedure of encoding a video image according to a TV application program of the computer shown in FIG. 1.

Embodiments of the present will be described below with reference to the accompanying drawings.

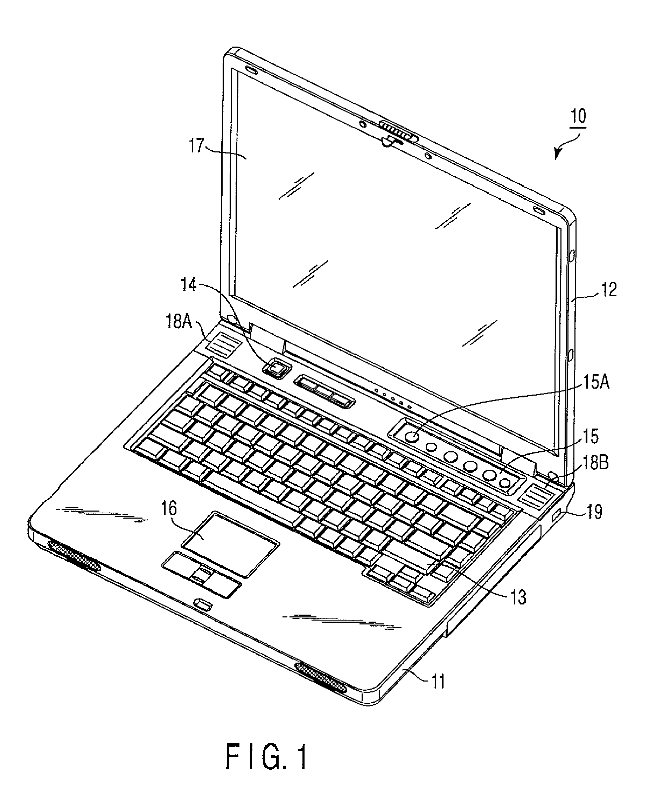

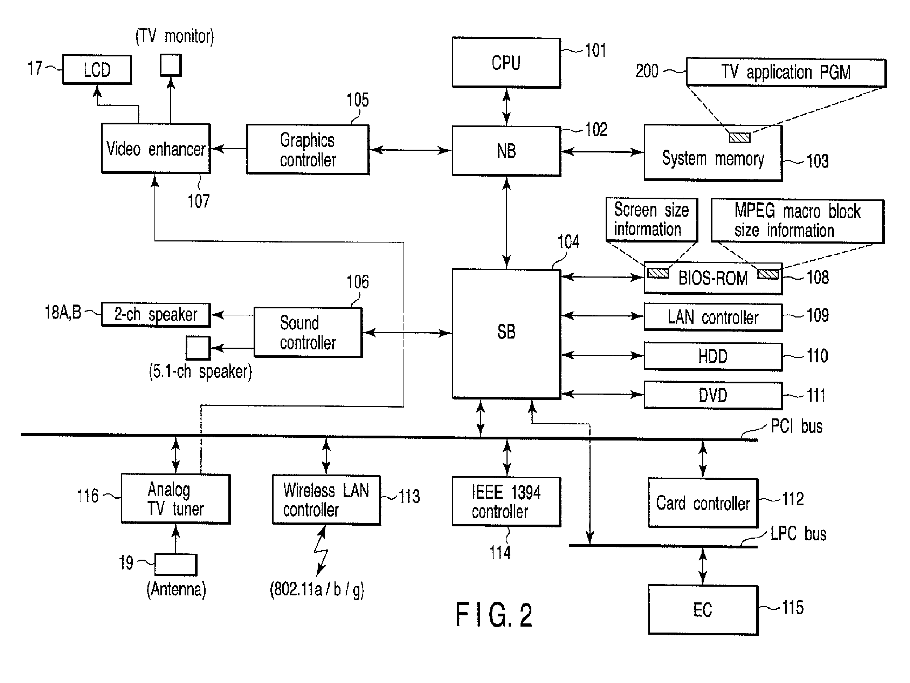

The configuration of an information processing apparatus according to one embodiment of the present invention will be explained below with reference to FIG. 1 and FIG. 2. The information processing apparatus is realized as a notebook-type personal computer, for example.

FIG. 1 is a perspective view showing a state that a display unit of a notebook-type personal computer 10 is opened. The computer 10 is composed of computer body 11 and display unit 12. The display unit 12 has a built-in display device comprising a thin film transistor liquid crystal display (TFT-LCD) 17. A display screen of the LCD 17 is positioned on the center of the display unit 12.

The display unit 12 is attached to the computer body 11 to be freely rotatable over a range between an opening position and a closed position. The computer body 11 has a thin box-shaped case, and the upper surface is provided with power button 14 for powering on/off the computer 10, input control panel 15, touch pad 16, and speakers 18A; 18B.

The input control panel 15 is an input device for inputting an event corresponding to the pressed button, and has several buttons for activating several functions. The button group includes a TV activate button 15A. The TV activate button 15A is a button for activating a TV function of reproducing and recording TV broadcast program data. User presses the button 15A, and thereby, a TV application program for performing the TV function is activated.

A dedicated sub-operating system for processing AV (audio-video) data is installed in the computer 10 in addition to a general main operating system. The foregoing TV application program is a program operating on the sub-operating system.

When the user presses the power button 14, the main operating system is booted up. On the other hand, when the user presses the TV activate button 15A, the sub-operating system is booted up, and not the main operating system. Then, the TV application program is automatically executed. The sub-operating system only has a minimum function for performing an AV function. For this reason, time taken to boot up the sub-operating system is considerably shorter than time taken to boot up the main operating system. Therefore, user only presses the TV activate button to make TV viewing/recording immediately.

The computer 10 is capable of receiving and reproducing terrestrial analog TV broadcasts. The right side of the computer body 11 is provided with an antenna terminal 19 for terrestrial analog TV broadcasts.

The system configuration of the computer 10 will be explained below with reference to FIG. 2.

As shown in FIG. 2, the computer 10 includes CPU 101, north bridge (NB) 102, system memory 103, south bridge (SB) 104, graphics controller 105, sound controller 106, video enhancer 107 and BIOS-ROM 108. The computer 10 further includes LAN controller 109, hard disk drive (HDD) 110, and DVD drive (DVDD) 111, card controller 112, wireless LAN controller 113, IEEE 1394 controller 114, embedded controller (EC) 115 and analog TV broadcast tuner 116.

The CPU 101 is a processor for controlling the operation of the computer 10. The CPU 101 executes various application programs such as main operating system/sub-operating system and TV application program 200. Moreover, the CPU 101 executes system basic input output system (BIOS) stored in the BIOS-ROM 108. The system BIOS is a program for controlling hardware.

The NB 102 functions as a bridge device for making a connection between a local bus of the CPU 101 and the SB 104. The NB 102 has a built-in memory controller for controlling an access to the system memory 103. Moreover, the NB 102 has a function of making communications with the graphics controller 105 via accelerated graphics port (AGP) bus and serial bus confirmable to PCI Express.

The graphics controller 105 is a display controller for controlling the LCD 17 used as a display monitor of the computer 10. Video data generated by the graphics controller 105 is supplied to the video enhancer 107 to subject the video data to video processing (quality control processing) for achieve high definition. The high definition video data made by the video enhancer 107 is supplied to the LCD 17. Moreover, high definition video data made by the video enhancer 107 is sent to an external TV monitor via a connector included in the computer body 11.

The SB 104 controls various devices on a low pin count (LPC) bus and on a peripheral component interconnect (PCI) bus. The SB 104 further has a built-in integrated drive electronics (IDE) controller for controlling HDD 110 and DVDD 111. Moreover, the SB 104 has a function of making communications with the sound controller 106.

The sound controller 106 is a sound generator device. The sound controller 106 outputs reproducing audio data to speakers 18A, 18B, and external 5.1-channel speaker system connected via a connector.

The card controller 112 controls cards such as PC card and secure digital (SD) card. The wireless LAN controller 113 is a wireless communication device, which makes wireless communications of the IEEE 802.11 standard. The IEEE 1394 controller 114 makes communications with external apparatus via a serial bus of the IEEE 1394 standard. The EC 115 is a single-chip microcomputer, which is integrated with embedded controller for power management and keyboard controller for controlling keyboard 13 and touch pad 16. The EC 115 has a function of powering on/off the computer 10 in accordance with the user's operation of the power button 14. Moreover, the EC 115 powers on the computer 10 in accordance with the user's operation of the TV activete button 15A.

The analog TV tuner 116 is a tuner module, which receives analog broadcast programs. The analog TV tuner 116 receives a specific channel broadcast signal from TV broadcast signals input via the antenna terminal 19. Broadcast program data received by the analog TV tuner 116 is subjected to the following processing under the control of the TV application program 200. Specifically, the data is supplied to the video enhancer 107 to be displayed on the LCD 17. Moreover, the data is transferred to the system memory 103 via the PCI bus to be encoded by the TV application program, and thereafter, recorded on the HDD 110.

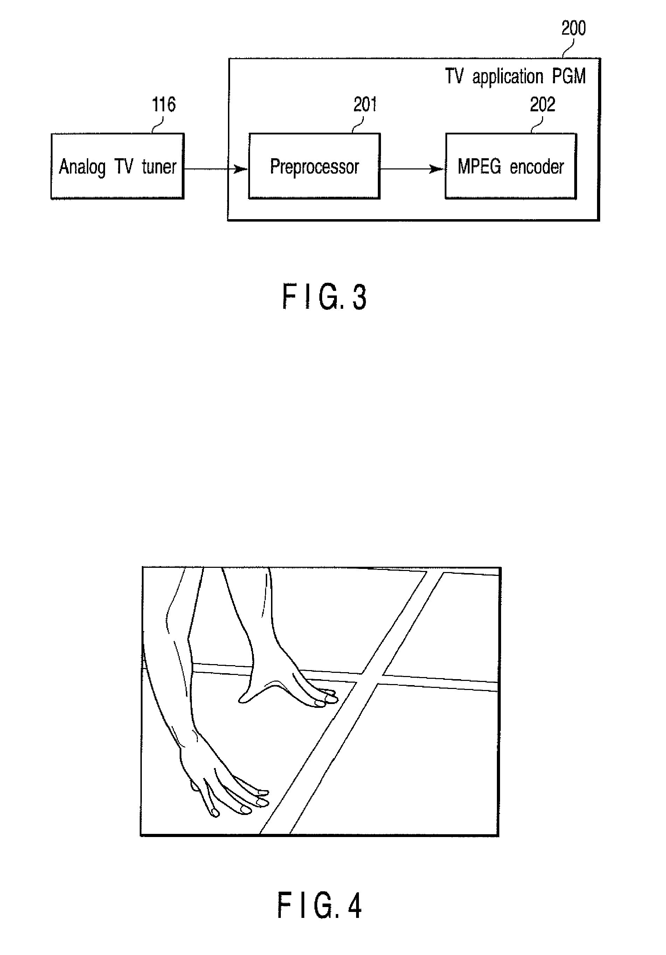

In other words, the computer 10 encodes the broadcast program data using the TV application program 200 like software. Moreover, the computer 10 uses the TV application program 200 to carry out image processing for improving the image quality of the encoded broadcast program data as a preprocess. FIG. 3 is an exemplary block diagram to explain the function of encoding the broadcast program data in the computer 10. As seen from FIG. 3, the TV application program 200 includes preprocessor 201 and MPEG encoder 202. The preprocessor 201 carries out image processing for improving the image quality of broadcast program data in the pre-stage of encoding. The MPEG encoder 202 compresses and encodes the broadcast program data according MPEG2 standard encoding format. The following is a detailed explanation of the image processing for improving the image quality by the preprocessor 201.

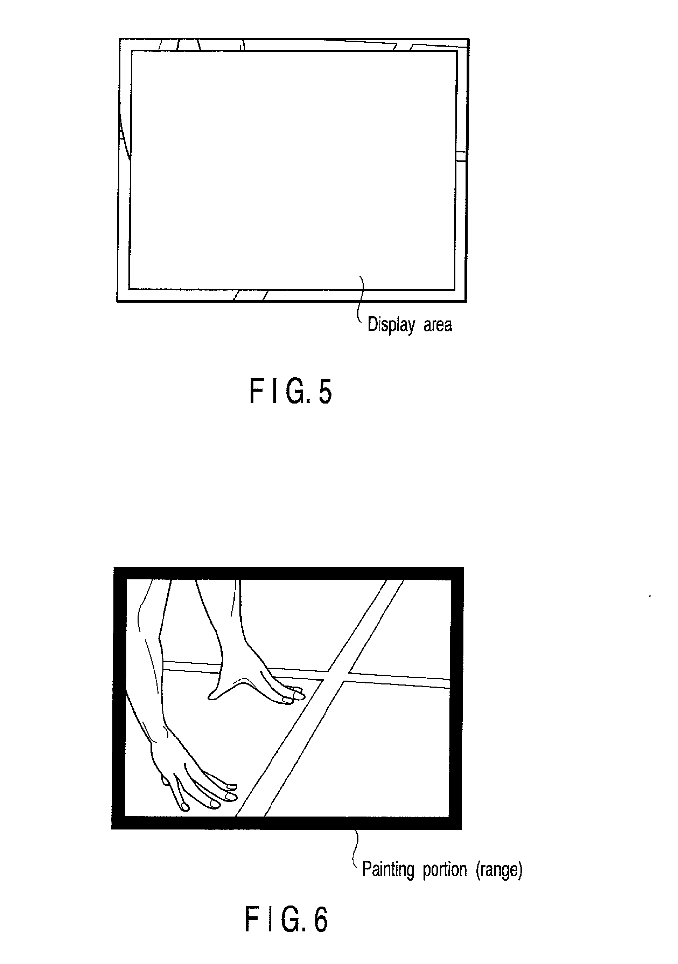

FIG. 4 shows an image of the broadcast program data output from the analog TV tuner 116. FIG. 5 shows an actual display area by the LCD 17. Namely, the peripheral portion of the image is not displayed on the LCD 17. If a change of the image remarkably appears in the peripheral portion, the MPEG encoder 202 spends much data for the non-display portion in encoding. As a result, there is a possibility of reducing the quality of the image, which should be displayed in the display area. Thus, the preprocessor 201 executes painting, that is, makes zero the luminance of image data of the portion outside the display area, as illustrated in FIG. 6. Then, in encoding by the MPEG encoder 202, an amount of data spent for the foregoing portion is made as small as possible, that is, the data allocated to the display area is made great. By doing so, the quality of the image in the display area is improved.

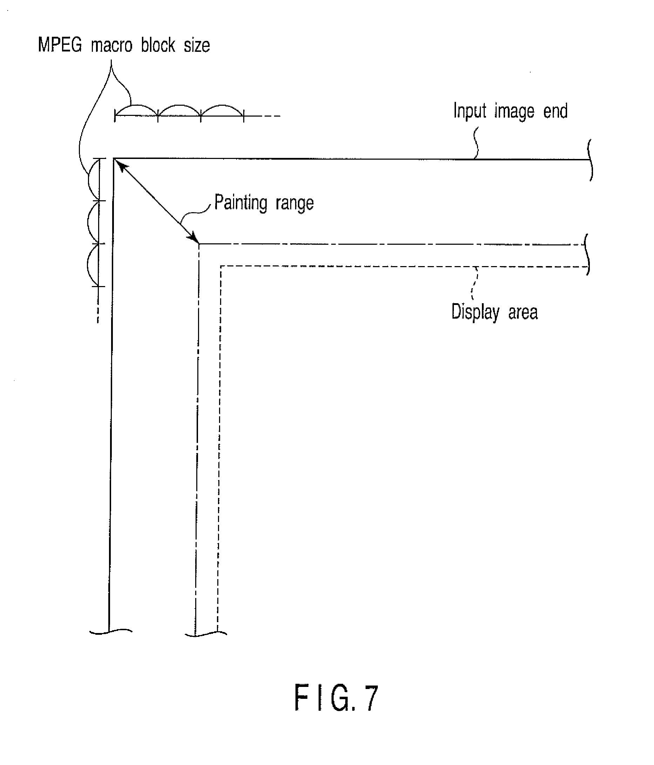

In order to achieve the foregoing painting, the BIOS-ROM 108 of the computer 10 is stored with screen size information showing a display area size. The preprocessor 201 acquires the screen size information stored in the BIOS-ROM 108 to calculate a painting range of the broadcast program data image output from the analog TV tuner 116. Moreover, the BIOS-ROM 108 is stored with MPEG macro block size information, which is a processing unit (hereinafter, macro block size) when the MPEG encoder 202 executes encoding. When calculating the painting range, the preprocessor 201 takes the macro block size into consideration. The principle of calculating the painting range based on the macro block size will be explained below with reference to FIG. 7.

In FIG. 7, the outermost solid line denotes the image end of the broadcast program data output from the analog TV tuner 116. On the other hand, the innermost broken line denotes an actual display area by the LCD 17 (shown by screen size information). The display area shown by the broken line is given having a range from the image end shown by the solid line to a predetermined position. The predetermined position exists inside a position exceeding two macro block sizes (expressed by MPEG macro block size information), and outside a position equivalent to three macro block sizes.

In this case, the preprocessor 201 does not calculate the entire portion outside the display area shown by the broken line as a painting range, but calculates the painting range in the following manner. Specifically, considering processing efficiency of the MPEG encoder 202, the preprocessor 201 gradually broadens the painting range by macro block size over a range from the image end shown by the solid line to the display area shown by the broken line. As seen from FIG. 7, the preprocessor 201 calculates a range from the image end shown by the solid line to a position shown by the dotted chain line inside from two macro block sizes as a painting range.

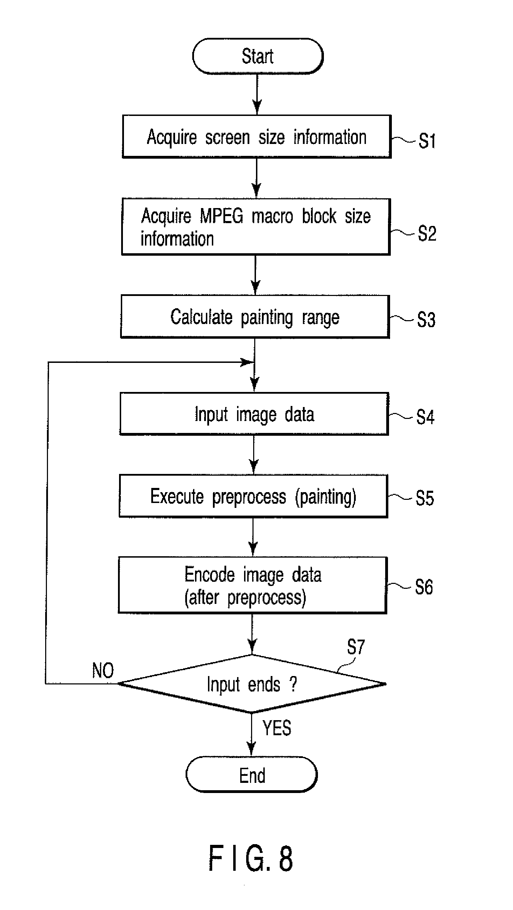

FIG. 8 is an exemplary flowchart to explain the video image encoding procedure by the TV application program 200 of the computer 10.

The preprocessor 201 acquires screen size information and MPEG macro block size information from the BIOS-ROM 108 (step S1, S2). Based on the acquired screen size information and MPEG macro block size information, the preprocessor 201 calculates a painting range (step S3). In this case, the preprocessor 201 calculates the painting range with respect to an image outside the display area to improve the quality of the image existing in the display area.

Then, the preprocessor 201 successively inputs image data output from the analog TV tuner 116 (step S4). Thereafter, the preprocessor 201 executes painting of the calculated range as an encoding preprocess (step S5). The preprocess by the preprocessor 201 is carried out, and thereafter, the MPEG encoder 202 encodes the image data (step S6). The procedures from step S4 to step S6 are repeated as long as image data input from the analog TV tuner 116 continues (NO of step S7). If image data input from the analog TV tuner 116 ends (YES of step S7), the procedure ends.

The computer 10 executes image processing with respect to image data outside the display area as the encoding preprocess. By doing so, it is possible to improve the image quality of the image data in the display area.

In the foregoing embodiment, painting making zero the luminance of image data is given as the preprocess; however, the present invention is not limited to the preceding method. For example, the following modification is readily made; specifically, color data is converted into a specific value to be unified to predetermined color. Moreover, even if the macro block size has not been considered, it is possible to sufficiently achieve the original purpose, that is, improvement of the image quality in the display area. In addition, the painting range may be preset without calculating it.

## Claims

1. An information processing apparatus **characterized by** comprising:
input means (116) for inputting video image data;
encoding means (202) for encoding the video image data input by the input means; and
preprocessing means (201) interposed between the input means and the encoding means, and for executing image processing for improving a quality of image data of an image portion inside a display area of the video image data encoded by the encoding means with respect to image data of an image portion outside the display area of the video image data input by the input means.

2. The information processing apparatus according to claim 1, **characterized in that** the preprocessing means converts luminance information of the image data of the image portion outside the display area into zero "0".

3. The information processing apparatus according to claim 1, **characterized in that** the preprocessing means converts color information of the image data of the image portion outside the display area into a value showing specific color.

4. The information processing apparatus according to claim 1, **characterized in that** the encoding means sets several pixels included in video image data as one block to execute encoding using the block as a processing unit, and
the preprocessing means calculates an image processing range based on the block size as the processing unit of the encoding means.

5. An information processing apparatus **characterized by** comprising:
a tuner (116) which receives an analog television broadcasts;
an encoder (202) which encodes video image data of the analog television broadcasts received by the tuner according to an MPEG format; and
preprocessing means (201) interposed between the tuner and the encoder, and for executing image processing for improving a quality of image data of an image portion inside a display area of video image data encoded by the encoder with respect to image data of an image portion outside the display area of the video image data of the analog television broadcasts received by the tuner.

6. The information processing apparatus according to claim 5, **characterized in that** the preprocessing means converts luminance information of the image data of the image portion outside the display area into zero "0".

7. The information processing apparatus according to claim 5, **characterized in that** the preprocessing means converts color information of the image data of the image portion outside the display area into a value showing specific color.

8. The information processing apparatus according to claim 5, **characterized in that** the encoder sets several pixels included in video image data as one block to achieve encoding using the block as a processing means, and
the preprocessing means calculates an image processing range based on the block size as the processing unit of the encoder.

9. A video image encoding method **characterized by** comprising:
inputting (S4) video image data;
encoding (S6) the input video image data; and
executing (S5) image processing for improving a quality of image data of an image portion inside a display area of the encoded video image data with respect to image data of an image portion outside the display area of the input video image data, as an encoding preprocess.

10. The video image encoding method according to claim 9, **characterized in that** the preprocess converts luminance information of the image data of the image portion outside the display area into zero "0".

11. The video image encoding method according to claim 9, **characterized in that** the preprocess converts color information of the image data of the image portion outside the display area into a value showing specific color.

12. The video image encoding method according to claim 9, **characterized in that** the encoding is executed using several pixels included in video image data as one block, and using the block as a processing unit, and
the preprocess calculates an image processing range based on the block size as the processing unit of the encoding.
